(19) Europäisches Patentamt
European Patent Office
Office européen des brevets

(11) Publication number: 0 013 630
B1

(12) EUROPEAN PATENT SPECIFICATION

(45) Date of publication of patent specification: 04.04.84

(51) Int. Cl.[3]: C 01 B 33/28, C 01 B 33/20, B 01 J 29/28

(21) Application number: 80300121.3

(22) Date of filing: 15.01.80

(54) ZSM-12 zeolite composition, method of preparing same and catalytic conversion therewith.

(30) Priority: 15.01.79 US 3144

(43) Date of publication of application:
23.07.80 Bulletin 80/15

(45) Publication of the grant of the patent:
04.04.84 Bulletin 84/14

(84) Designated Contracting States:
BE DE FR GB IT NL

(56) References cited:
DE - A - 2 755 770
GB - A - 1 161 974
US - A - 3 832 449
US - A - 4 104 294

**The file contains technical information submitted after the application was filed and not included in this specification**

(73) Proprietor: MOBIL OIL CORPORATION
150 East 42nd Street
New York New York 10017 (US)

(72) Inventor: Rubin, Mae Koenig
50 Belmont Avenue Bala Cynwyd
Pennsylvania 19004, Montgomery (US)
Inventor: Plank, Charles Joseph
522 Delaware Street
Woodbury New Jersey 08096, Gloucester (US)
Inventor: Rosinski, Edward Joseph
Route No. 1 Box 325A
Pedricktown New Jersey 08067, Salem (US)

(74) Representative: Cooper, John Anthony
CARPMAELS & RANSFORD 43 Bloomsbury
Square
London WC1A 2RA (GB)

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

EP 0 013 630 B1

# ZSM-12 zeolite composition, method of preparing same and catalytic conversion therewith

This invention relates to a new compositional form of the zeolite ZSM-12, to a method for its preparation and to its use in catalytic conversion of organic compounds.

Zeolitic materials, both natural and synthetic, have been demonstrated in the past to have catalytic properties for various types of hydrocarbon conversion. Certain zeolitic materials are ordered, porous crystalline aluminosilicates having a definite crystalline structure as determined by X-ray diffraction, within which there are a large number of smaller cavities which may be interconnected by a number of still smaller channels or pores. These cavities and pores are uniform in size within a specific zeolitic material. Since the dimensions of these pores are such as to accept for adsorption molecules of certain dimensions while rejecting those of larger dimensions, these materials have come to be known as "molecular sieves" and are utilized in a variety of ways to take advantage of these properties.

Such molecular sieves, both natural and synthetic, include a wide variety of positive ion-containing crystalline aluminosilicates. These aluminosilicates can be described as a rigid three-dimensional framework of $SiO_4$ and $AlO_4$ in which the tetrahedra are cross-linked by the sharing of oxygen atoms whereby the ratio of the total aluminum and silicon atoms to oxygen atoms is 1:2. The electrovalence of the tetrahedra containing aluminum is balanced by the inclusion in the crystal of a cation, for example, an alkali metal or an alkaline earth metal cation. This can be expressed wherein the ratio of aluminum to the number of various cations, such as Ca/2, Sr/2, Na, K or Li is equal to unity. One type of cation may be exchanged either entirely or partially with another type of cation utilizing ion exchange techniques in a conventional manner. By means of such cation exchange, it has been possible to vary the properties of a given aluminosilicate by suitable selection of the cation. The spaces between the tetrahedra are occupied by molecules of water prior to dehydration.

Prior art techniques have resulted in the formation of a great variety of synthetic aluminosilicates. These aluminosilicates have come to be designated by letter or other convenient symbols, as illustrated by zeolite A (U.S. Patent 2,882,243), zeolite X (U.S. Patent 2,882,244), zeolite Y (U.S. Patent 3,130,007), zeolite ZK-5 (U.S. Patent 3,247,195), zeolite ZK-4 (U.S. Patent 3,314,752), zeolite ZSM-5 (U.S. Patent 3,702,886), and zeolite ZSM-11 (U.S. Patent 3,709,979).

The $SiO_2/Al_2O_3$ ratio of a given zeolite is often variable. For example, zeolite X can be synthesized with $SiO_2/Al_2O_3$ ratio of from 2 to 3; zeolite Y, from 3 to about 6. In some zeolites the upper limit of $SiO_2/Al_2O_3$ ratio is unbounded. ZSM-5 is one such example wherein $SiO_2/Al_2O_3$ ratio is at least five. U.S. Patent 3,941,871 discloses a crystalline metal organosilicate essentially free of aluminum and exhibiting an X-ray diffraction pattern characteristic of ZSM-5 type aluminosilicates. U.S. Patents 4,061,724, 4,073,865 and 4,104,294 describe microporous, crystalline silicas or organosilicates. DE—A—2,213,109 defines zeolite ZSM-12 by its lattice geometry as manifested by x-ray diffraction data.

The present invention is directed to a novel compositional form of zeolite ZSM-12, a method for its preparation, and the conversion of organic compounds contacted therewith.

The new form of ZSM-12 can be identified, in terms of moles of oxides per 100 moles of silica as follows:

$$(0\text{—}8)M_{2/n}O;\ [(a)Cr_2O_3+(b)Fe_2O_3+(c)Al_2O_3]:\ 100\ SiO_2,$$

in the dehydrated state, wherein M is at least one cation having a valence n, a=0—4, b=0—5, c=0.001—0.5 provided that a and b cannot both be 0 and that, when either a or b is 0, b or a respectively must be greater than c. The chromium and iron need not all occur as $Cr_2O$, or $Fe_2O_3$ but are so calculated in the formula.

In the as synthesized form, the zeolite has a formula, in terms of moles of oxides, after dehydration, per 100 moles of silica, as follows:

$$(0\text{—}4)R_2O:\ (0\text{—}4)M_{2/n}O:\ [(a)Cr_2O_3+(b)Fe_2O_3+(c)Al_2O_3]:\ 100\ SiO_2,$$

wherein $R_2O$ is an organic compound containing an element of Group 5A (N, P, As, Sb and Bi), preferably N or P, more preferably N, containing at least one alkyl or aryl group having between 1 and 7 carbon atoms, preferably between 2 and 5, more preferably containing at least one ethyl group and still more preferably $R_2O$ is a quaternary ammonium compound containing at least one ethyl group, M is an alkali or alkaline earth metal, a=0—4, b=0—5, and c=0.001—0.4.

The new form of ZSM-12 may have small amounts of Fe and/or Cr in positions of tetrahedral substitution within the silica lattice. To this extent, the latter possesses a negative charge, one excess electron for each such atom of substitution, which is balanced by cations. These cations may be replaced at least in part by other ions using conventional ion exchange techniques. Due to pore blockage, in some cases, by the $R_2O$ species it may be necessary to pre-calcine the zeolite prior to ionexchange. Ions introduced to replace the original alkali, alkaline earth and/or organic cations may be any that are desired so long as they can pass through the channels within the lattice. Desired replacing

ions are those of hydrogen, ammonium and metals of Groups I through VIII of the Periodic Table. Among the metals those particularly preferred are rare earth metals, manganese, zinc and those of Group VIII of the Periodic Table.

ZSM-12 is defined by its lattice geometry as manifested by its X-ray diffraction pattern, which has the following significant lines:

TABLE 1

| Interplanar spacing D (A) | Relative intensity |
|---|---|
| 11.9±0.2 | m |
| 10.1±0.2 | m |
| 4.76±0.1 | w |
| 4.29±0.08 | vs |
| 3.98±0.08 | m |
| 3.87±0.07 | vs |
| 3.49±0.07 | w |
| 3.38±0.07 | m |
| 3.20±0.06 | w |
| 3.05±0.05 | w |
| 2.54±0.03 | w |

These values were determined by standard techniques. The radiation was the K-alpha doublet of copper and a diffractometer equipped with a scintillation counter and a strip chart pen recorder was used. The peak heights, I, and the positions as a function of 2 theta, where theta is the Bragg angle, were read from the diffractometer chart. From these, the relative intensities, 100 $I/I_o$, where $I_o$ is the intensity of the strongest line or peak, and d(obs.), the interplanar spacing in A, corresponding to the recorded lines, were estimated. In Table 1 the relative intensities are given in terms of the symbols m=medium, w=weak, and vs=very strong. It should be understood that this X-ray diffraction pattern is characteristic of all the species of ZSM-12 compositions. The sodium form as well as other cationic forms reveal substantially the same pattern with some minor shifts in interplanar spacing and variation in relative intensity. Other minor variations can occur depending on the silicon to aluminum ratio of the particular sample, as well as its degree of thermal treatment.

The new form of ZSM-12 can be prepared from a reaction mixture containing a source of silica, $R_2O$, an alkali metal oxide, e.g. sodium, a chromium or iron compound, water, and no added alumina, and having a composition, in terms of mole ratios of oxides, falling within the following ratios:

| Reactants | Broad | Preferred |
|---|---|---|
| $SiO_2/R_2O$ = | 2 to 50 | 4 to 23 |
| $M_2O/R_2O$ = | 0.0 to 8.0 | 0.1 to 2.4 |
| $(Cr_2O_3+Fe_2O_3)/R_2O$ = | 0.01 to 1.0 | 0.01 to 0.3 |
| $H_2O/R_2O$ = | 80 to 500 | 100 to 400 |

wherein $R_2O$ is the oxide form of an organic compound of an element of Group 5-A of the Periodic Table and can be an organic compound containing at least one ethyl group and M is alkali or alkaline earth metal an maintaining the mixture at crystallization temperature until crystals of the zeolite material are formed. As mentioned above, no alumina is added. The only aluminum present occurs as an impurity in some other component of the crystallization medium.

Crystallization can be carried out at either static or stirred condition. We prefer static conditions in polypropylene jars at 99°C (210°F) or in glass-lined stainless steel autoclaves. The total useful range of temperatures is 80°C to 180°C for about 6 hours to 150 days. Thereafter, the crystals are separated from the liquid and recovered. The composition can be prepared utilizing materials which supply the appropriate oxide. Such compositions include sodium silicate, silica hydrosol, silica gel, silicic acid, sodium hydroxide, chromic potassium sulfate or ferric ammonium sulfate. The organic compounds can include any element of Group 5-A such as nitrogen, phosphorus, arsenic, antimony, preferably nitrogen or phosphorous. The preferred compounds are quaternary compounds generally expressed by the following formula:

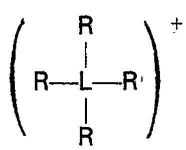 or $R_4L$

wherein L is an element of Group 5-A of the Periodic Table, preferably N, and each R is an alkyl or aryl

group having between 1 and 7 carbon atoms preferably at least one R group is an ethyl group. While normally each alkyl or aryl group will be the same, it is not necessary that each group have the same number of carbon atoms in the chain. The oxide of the quaternary compound is generally supplied by introducing into the reaction mixture a composition such as tetraethyl, hydroxide or chloride of the desired 5-A element. In preparing an ammonium species, tetraethyl ammonium chloride or bromide or, less preferably, hydroxide is useful. In preparing the phosphonium species of the zeolite tetraethyl phosphonium chloride is particularly desirable as a means of incorporating the quaternary compound. The other elements of Group 5-A behave similarly and thus zeolites containing the same can be prepared by the same manipulative procedure substituting the other Group 5-A metal for nitrogen. It should be realized that the oxide can be supplied from more than one source. The reaction mixture can be prepared either batchwise or continuously. Crystal size and crystallization time will vary with the nature of the reaction mixture employed and the crystallization conditions.

The quaternary compounds need not be used as such. They may be produced *in situ* by the addition of the appropriate precursors. These precursors comprise a compound characterized by the formula $R_1R_2R_3L$ where $R_1$, $R_2$ and $R_3$ are selected from alkyl, substituted alkyl, aryl substituted aryl, cycloalkyl, substituted cycloalkyl and hydrogen and L is an element of group 5-A and a compound of the formula $R_4L$ where $R_4$ is alkyl, substituted alkyl, cycloalkyl, substituting cycloalkyl, aryl and substituted aryl and L is an electronegative group. According to a special embodiment of the invention, the method of the invention can be practiced using the compound $R_1R_2R_3$ alone. In this case it is assumed that quaternary compounds are not formed. Thus, in specific embodiments one may use as the source of $R_2O$, amines or phosphines either primary, secondary or tertiary as well as diamines without addition of any $R_4X$.

In all cases synthesis is facilitated by the presence of at least 0.001%, preferably at least 0.01% and still more preferably at least 0.1% seed crystals (based on total weight).

As indicated above, crystals are formed in a wide variety of particle sizes. Generally speaking, the particles can be in the form of a powder, a granule, or a molded product, such as an extrudate having particle size sufficient to pass through a 2 mesh (Tyler) screen (9.423 mm) and be retained on a 400 mesh (Tyler) screen (38 $\mu$m). In cases where a catalyst is molded, such as by extrusion, the crystals can be extruded before drying or dried or partially dried and then extruded.

The zeolite according to the invention, especially in its metal, hydrogen, ammonium, alkylammonium and arylammonium forms, can be beneficially converted to another form for use as a catalyst or an adsorbant by thermal treatment. This thermal treatment is generally performed by heating one of these forms in an atmosphere such as air, nitrogen, hydrogen, steam, etc., at a temperature of at least 370°C (700°F) for at least 1 minute and generally not greater than 20 hours to remove part or all of the water and the organic constituent. While subatmospheric pressure can be employed for the thermal treatment, atmospheric pressure is desired for reasons of convenience. The thermal treatment can be performed at a temperature up to about 930°C (1700°F). The thermally treated product is particularly useful in the catalysis of certain hydrocarbon conversion reactions.

The zeolite can also be used as a catalyst in intimate combination with a hydrogenating component such as tungsten, vanadium, molybdenum, rhenium, nickel, cobalt, chromium, manganese, or a noble metal such as platinum or palladium where a hydrogenation-dehydrogenation function is to be performed. Such component can be exchanged into the composition, impregnated therein or physically intimately admixed therewith. Such component can be impregnated in or on to it such as, for example, by, in the case of platinum, treating the zeolite with a solution containing a platinum metal-containing ion. Thus, suitable platinum compounds include chloroplatinic acid, platinous chloride and various compounds containing the platinum amine complex.

Simple dehydration of the zeolite can also be performed at lower temperatures, such as room temperature, merely by placing the ZSM-12 in a vacuum, but a longer time is required to obtain a sufficient amount of dehydration.

In the case of many catalysts it is desired to incorporate the zeolite with another material resistant to the temperatures and other conditions employed in organic conversion processes. Such materials include active and inactive material and synthetic or naturally occurring zeolites as well as inorganic materials such as clays, silica and/or metal oxides. The latter may be either naturally occurring or in the form of gelatinous precipitates or gels including mixtures of silica and metal oxides. Use of a material in conjunction with the zeolite, i.e. combined therewith which is active, tends to improve the conversion and/or selectivity of the catalyst in certain organic conversion processes. Inactive materials suitably serve as diluents to control the amount of conversion in a given process so that products can be obtained economically and orderly without employing other means for controlling the rate of reaction. These materials may be incorporated into naturally-occurring clays, e.g. bentonite and kaolin, to improve the crush strength of the catalyst under commercial operating conditions. Said material, i.e. clays, oxides, etc., function as binders for the catalyst. It is desirable to provide a catalyst having good crush strength because in commercial use it is desirable to prevent the catalyst from breaking down into powder-like materials. These clay binders have been employed normally only for the purpose of improving the crush strength of the catalyst.

Naturally-occurring clays which can be composited with the new form of ZSM-12 include the

montmorillonite and kaolin family, which families include the subbentonites, and the kaolins commonly known as Dixie McNamee-Georgia and Florida clays or others in which the main mineral constituent is halloysite, kaolinite, dickite, nacrite, or anauxite. Such clays can be used in the raw state as originally mined or initially subjected to calcination, acid treatment or chemical modification. Binders useful for compositing with the ZSM-12 type catalyst also include inorganic oxides, notably alumina.

In addition to the foregoing materials, ZSM-12 can be composited with a porous matrix material such as silica-alumina, silica-magnesia, silica-zirconia, silica-thoria, silica-beryllia, silica-titania as well as ternary compositions such as silica-alumina-thoria, silica-alumina-zirconia, silica-alumina-magnesia and silica-magnesia-zirconia. The relative proportions of zeolite and matrix vary widely, with the zeolite content ranging from about 1 to about 90 percent by weight and more usually, particularly when the composite is prepared in the form of beads, in the range of about 2 to about 50 percent by weight of the composite.

Employing a catalytically active form of a ZSM-12 type catalyst of this invention which may contain additional hydrogenation components reforming stocks can be reformed employing a temperature between 370°C (700°F) and 540°C (1000°F). The pressure can be between 790.8 and 6996.0 kPa (100 and 1000 psig) but is preferably between 1480.2 and 4927.6 kPa (200 and 700 psig). The liquid hourly space velocity is generally between 0.1 and 10, preferably between 0.5 and 4 and the hydrogen to hydrocarbon mole ratio is generally between 1 and 20 preferably between 4 and 12.

The catalyst can also be used for hydroisomerization of normal paraffins, when provided with a hydrogenation component, e.g., platinum. Hydroisomerization is carried out at a temperature between 93°C and 370°C (200° and 700°F), preferably 150° to 290°C (300° to 550°F), with a liquid hourly space velocity between 0.01 and 2, preferably between 0.25 and 0.50 employing hydrogen such that the hydrogen to hydrocarbon mole ratio is between 1:1 and 5:1. Additionally, the catalyst can be used for olefin or aromatic isomerization employing temperatures between −1°C and 370°C (30°F and 700°F).

The catalyst can also be used for reducing the pourpoint of gas oils. This reduction is carried out at a liquid hourly space velocity between about 10 and about 30 and a temperature between about 430°C (800°F) and about 590°C (1,100°F).

Other reactions which can be accomplished employing the catalyst of this invention containing a metal, e.g., platinum, include hydrogenation-dehydrogenation reactions and desulfurization reactions, olefin polymerization (oligomerization) and other organic compound conversion such as the conversion of alcohols (e.g. methanol) to hydrocarbon.

In the examples which follow whenever adsorption data are set forth for comparison of sorptive capacities for water, cyclohexane and n-hexane, they were determined as follows:

A weighed sample of the calcined adsorbant was contacted with the desired pure adsorbate vapor in an adsorption chamber, evacuated to <132 Pa (<1 mm) and contacted with 1600 Pa (12 mm Hg) of water vapor and 2670 Pa (20 mm Hg) of cyclohexane and n-hexane vapor, pressures less than the vapor-liquid equilibrium pressure of the respective adsorbate at room temperature. The pressure was kept constant (within about ±66 Pa (0.5 mm)) by addition of adsorbate vapor controlled by a manostat during the adsorption period which did not exceed about eight hours. As adsorbate was adsorbed by the zeolite the decrease in pressure caused the manostat to open a valve which admitted more adsorbate vapor to the chamber to restore the above control pressures. Sorption was complete when the pressure change was not sufficient to activate the manostat. The increase in wieght was calculated as the adsorption capacity of the sample in g/100 g of calcined adsorbant.

Examples 1—14

In these examples, the starting gel reaction mixture was prepared from sodium silicate (28.8% $SiO_2$, 8.9% $Na_2O$, 62% $H_2O$) fume silica (HiSil, 91.3% $SiO_2$), tetraethylammonium bromide, chromic potassium sulfate, ferric ammonium sulfate, sodium hydroxide and water. Crystallization was carried out at static conditions in polypropylene jars or in glass-lined stainless steel autoclaves 138°C (280°F). After crystallization, the solids were separated from any unreacted components by filtration and the then water washed followed by drying at 110°C (230°F). The amounts of starting material, identification of same, product compositions, and adsorption data are listed in Tables 2 and 3 set forth immediately hereinbelow.

TABLE 2

| Examples | 1 | 2 | 3 | 4 | 5 | 6 | 7 | 8 | 9 |
|---|---|---|---|---|---|---|---|---|---|
| Starting materials, gms | | | | | | | | | |
| A. Q-Brand (28.8% $SiO_2$ | | | | | | | NaOH | | |
| 8.9% $Na_2O$, 62.0% $H_2O$) | 30.5 | 127.5 | 61.0 | 30.5 | 91.5 | 102 | 7.0 | 85.2 | 30.5 |
| Na silicate | | | | | | | | | |
| $H_2O$ | 20.0 | 105 | 50.0 | 30.0 | 90.0 | 60.0 | 212 | 60.0 | 30.0 |
| Hi Sil (91.3% $SiO_2$) | | | | | | | 48.0 | | |
| B. Cr K $(SO_4)_2 \cdot 12\ H_2O$ | 2.2 | 2.6 | 4.4 | 4.4 | 13.2 | 4.1 | 9.26 | 2.6 | 2.2 |
| $H_2SO_4$ | 1.35 | 10.9 | 2.7 | 1.1 | 3.3 | 8.5 | | 2.52 | 1.3 |
| $H_2O$ | 53.0 | 75.0 | 120 | 53.0 | 159 | 60.0 | | 120 | 53 |
| C. Tetraethylammonium | 14.6 | 24.0 | 29.2 | 6.0 | 18.0 | 19.2 | 40.0 | 15.6 | 14.6 |
| Bromide | | ZSM-12 seeds 0.17 gms | | | | | | | |
| Starting composition, moles | | | | | | | | | |
| $TEA_2O$[1] | 1.0 | 1.0 | 1.0 | 1.0 | 1.0 | 1.0 | 1.0 | 1.0 | 1.0 |
| $Na_2O$ | 0.62 | 1./12 | 0.62 | 1.07 | 1.07 | 0.97 | .532 | 2.35 | 0.63 |
| $Cr_2O_3$ | 0.063 | 0.046 | 0.062 | 0.309 | 0.309 | 0.089 | 0.098 | 0.07 | 0.063 |
| $K_2O$ | 0.063 | 0.046 | 0.062 | 0.309 | 0.307 | 0.089 | 0.098 | 0.07 | 0.063 |
| $SiO_2$ | 4.21 | 10.74 | 4.17 | 10.3 | 10.3 | 10.6 | 7.68 | 11.0 | 4.18 |
| $H_2O$ | 146 | 252 | 165 | 399 | 399 | 222 | 123 | 349 | 162 |
| Crystallization conditions | | | | | | | | | |
| Temp °C (°F) | 138 (280) | 99 (210) | 99 (210) | 138 (280) | 99 (210) | 99 (210) | 99 (210) | 99 (210) | 138 (280) |
| Days | 31 | 195 | 142 | 19 | 165 | 166 | 160 | 100 | 30 |
| X-ray analysis | ZSM-12 70% | ZSM-12 105% | ZSM-12 80% | ZSM-12 ZSM-5 | ZSM-12 65% | ZSM-12 65% | ZSM-12 85% | ZSM-12 80% (540°C) 1000°F | ZSM-12 70% +beta |

TABLE 2 (contd.)

| | | | | | | |
|---|---|---|---|---|---|---|
| Product composition, wt. % | | | | | | |
| N | | 0.94 | 0.84 | | 0.76 | |
| Na | | 0.68 | 0.84 | | 1.0 | 0.74 |
| Cr | | 0.63 | 2.9 | | 1.8 | 2.5 |
| K | | 0.01 | 0.24 | | 0.32 | |
| $SiO_2$ | | 83.2 | 79.7 | | 81.7 | 89.5 |
| Ash | | 87.3 | 86.1 | | 87.4 | 97.6 |
| $Al_2O_3$ | | 0.21 | 0.20 | | 0.55 | 0.47 |
| Product compositions moles[2] | | | | | | |
| $R_2O$ | | 2.48 | 2.27 | | 1.99 | |
| $Na_2O$ | | 1.08 | 1.38 | | 1.59 | 1.04 |
| $K_2O$ | | 0.01 | 0.23 | | 0.30 | |
| $Cr_2O_3$ | | 0.44 | 2.10 | | 1.27 | 1.55 |
| $Fe_2O_3$ | | — | | | | |
| $Al_2O_3$ | | 0.15 | 0.14 | | 0.40 | 0.3 |
| $SiO_2$ | | 100 | 100 | | 100 | 100 |
| Molar ratio $SiO_2/Al_2O_3$ | | *667* | *714* | | *250* | *333* |
| Adsorption, wt. % | | | | | | |
| $C_y$—$C_6$ | 1.3 | 8.0 | | 3.1 | 4.1 | |
| n-$C_6$ | 2.5 | 7.4 | | 6.4 | 3.6 | |
| $H_2O$ | 6.0 | 9.4 | | 10.3 | 8.3 | |
| Surface area, $m^2/gm$ | 79 | | | 185 | | |

(1) TEA=tetraethylammonium
(2) Calculated as 100% anhydrous solids.

TABLE 3

| Example | 10 | 11 | 12 | 13 | 14 |
|---|---|---|---|---|---|
| Starting materials, gms | | | | | |
| A. Q-Brand, Na silicate[1] | 127.5 | 7.3 NaOH | 195[1] | 2.8 NaOH | 2.8 NaOH |
| $H_2O$ | 105.0 | 100 | 50 | 42.5 | 40.0 |
| Fume silica (91.3% $SiO_2$) | | 20.2 | | 19.2 | 19.2 |
| B. $FeNH_4(SO_4)_2 \cdot 12H_2O$ | 2.6 | | | | |
| $Cr\,K\,(SO_4)_2 \cdot 12H_2O$ | | 1.3 | 4.6 | 3.7 | 3.7 |
| $H_2SO_4$ | 10.9 | 5.45 | 10.0 | | |
| $H_2O$ | 75.0 | 40.0 | 80.0 | 42.5 | 45.0 |
| C. Tetraethylammonium bromide | 24.0 | 12.0 | 18.8 | 16.0 | 16.0 |
| Starting composition, moles | | | | | |
| $(TEA)_2O$ | 1.0 | 1.0 | 1.0 | 1.0 | 1.0 |
| $Na_2O$ | 1.10 | 1.10 | 2.10 | 0.532 | 0.532 |
| $Fe_2O_3$ | 0.047 | | | | |
| $Cr_2O_3$ | | 0.045 | 0.103 | 0.098 | 0.097 |
| $K_2O$ | | 0.045 | 0.103 | 0.098 | 0.097 |
| $SiO_2$ | 23.2 | 10.8 | 18.3 | 7.68 | 7.68 |
| $H_2O$ | 253 | 276 | 326 | 123 | 126 |
| Crystallization conditions | | | | | days 10—200 |
| Temp. °C (°F) | 99 (210) | 99 (210) | 99 (210) | 141 (285) | 141 (285) |
| Days | 145 | 149 | 200 | 15 | 10 |
| X-ray analysis | ZSM-12 95% | ZSM-12 95% | ZSM-12 110% | ZSM-12 75%+trace cristobalite | ZSM-12 75% |
| Product composition, wt. % | | | | | |
| N | 0.99 | 0.94 | 0.98 | | |
| Na | 0.66 | 0.81 | 0.71 | | |
| Fe | 0.91 | | | | |
| Cr | | 0.70 | 0.93 | | |
| K | | 0.10 | <0.01 | | |
| $SiO_2$ | 83.05 | 81.48 | 83.9 | | |
| Ash | 89.61 | 87.45 | 87.5 | | |
| $Al_2O_3$ | 0.23 | 0.70 | 0.28 | | |
| Product composition, moles | | | | | |
| $R_2O$ | 2.54 | 2.46 | 2.50 | | |
| $Na_2O$ | 1.04 | 1.30 | 1.10 | | |
| $K_2O$ | | 0.09 | <0.01 | | |
| $Cr_2O_3$ | | 0.5 | 0.64 | | |
| $Fe_2O_3$ | 0.59 | | | | |
| $Al_2O_3$ | 0.16 | 0.5 | 0.19 | | |
| $SiO_2$ | 100 | 100 | 100 | | |
| $SiO_2/Al_2O_3$ | 625 | 200 | 526 | | |
| Adsorption, wt. % (after 15 hrs. @ 540°C (1000°F)) | | | | | |
| $C_y$—$C_6$ | 8.5 | | | | |
| n-$C_6$ | 7.0 | | | | |
| $H_2O$ | 8.1 | | | | |
| Surface area m²/gm | 280 | | | | |

[1] Na silicate=(25.3% $SiO_2$, 6.75% $Na_2O$, 68% $H_2O$)
[2] Calculated as 100% anhydrous solids.

A review of the foregoing data in Tables 2 and 3 shows that the $Al_2O_3$ content (after drying) of the as synthesized materials varied from 0.20 (Example 3) to 0.70 wt. % (Example 11).

Example 15—17

The compositions obtained from the preparations of Examples 2, 7 and 10 were tested for relative hexane cracking activity ($\alpha$-values), at 540°C (1000°F). Conditions of base exchange treatment of the catalysts, compositions after base exchange and calcination, test results and the like, are listed in Table 4 set forth hereinbelow.

Catalytic cracking activity is indicated by the weight percent conversion of hexane to lower

boiling $C_1$—$C_5$ hydrocarbons, while isomerization activity is indicated by weight percent conversion to hexane isomerization. Cracking activity is also indicated quantitatively by the term alpha ($\alpha$): the $\alpha$-test is described in a letter to the editor entitled "Superactive Crystalline Aluminosilicate Hydrocarbon Cracking Catalysts" by P. B. Weisz and J. N. Miale, Journal of Catalysis, Vol. 4, pp. 527—529 (August 1965).

TABLE 4

| Example | 15 | 16 | 17 |
|---|---|---|---|
| Catalyst description** | material of (Ex. 2) | material of (Ex. 7) | material of (Ex. 10) |
| Pre-exchange treat. | T 10 540°C (1000°F) | T 10 540°C (1000°F) | T 10 540°C (1000°F) |
| 10% $NH_4Cl$ treat 88—91°C (190—195°F) | 1×1 hr<br>1×2 hrs<br>1×3 hrs | 3×1 hr<br>2×2 hrs | 2×1 hr<br>2×1.5 hrs |
| 10% $NH_4Cl$ treat 60°C (140°F) | 16 hrs | 17.5 (71°C (160°F)) | |
| Composition, wt. % | | | |
| K | | | |
| Na | 0.02 | 0.26 | 0.03 |
| Cr | 0.05 | 0.15 | Fe 0.98 |
| $SiO_2$ | 99.4 | 96.0 | 92.8 |
| Ash | 99.2 | 99.8 | 97.4 |
| $Al_2O_3$ | 0.2 | 0.63 | 0.18 |
| Product composition, moles(1) | | | |
| $Na_2O$ | 0.02 | 0.36 | 0.04 |
| $K_2O$ | — | — | — |
| $Cr_2O_3$ | 0.03 | 0.09 | — |
| $Fe_2O_3$ | — | — | 0.57 |
| $Al_2O_3$ | 0.12 | 0.39 | 0.11 |
| $SiO_2$ | 100 | 100 | 100 |
| Molar ratio $SiO_2/Al_2O_3$ | 833 | 256 | 909 |
| Surface area, $m^2$/gm | 292 | 246 | |
| —test 540°C (1000°F) | | | |
| n-$C_6$ conversion, wt. % | | | |
| 5 min | 10.3 | 29.7 | 2.8 |
| 25 min | 10.2 | 27.2 | 1.9 |
| $\alpha$-value 5 min | 2.1 | 6.7 | 0.6 |
| 25 min | 2.1 | 6.1 | 0.4 |

*see Table 3
**see Table 2
(1) Calculated as 100% anhydrous solids.

A review of the data obtained in Table 4 reveals that n-hexane conversion after 5 minutes ranged from 2.8 (Example 17) to 29.7 (Example 16) wt. percent. $\alpha$-Values ranged after 5 minutes from 2.1 (Example 17) to 6.7 (Example 16).

**Claims**

1. Zeolite ZSM-12 having the composition, in terms of moles of anhydrous oxides:

$$0—8\ M_{2/n}O: [(a)\ Cr_2O_3+(b)\ Fe_2O_3+(c)\ Al_2O_3]: 100\ SiO_2$$

wherein M is at least one cation of valence n, a=0 to 4, b=0 to 5 and c=0.001 to 0.5, provided that a and b cannot both be 0 and that, when either a or b is 0, b or a respectively must be greater than c.

2. A zeolite according to claim 1 having the composition:

$$0—4\ R_2O: 0—4\ M_{2/n}O: [(a)\ Cr_2O_3+(b)\ Fe_2O_3+(c)\ Al_2O_3]: 100\ SiO_2$$

wherein $R_2O$ is the oxide form of an organic compound containing an element of group 5-A of the Periodic Table which compound comprises one or more alkyl or aryl groups having from 1 to 7 carbon atoms at least one of which is ethyl.

3. A zeolite according to claim 2 wherein R is tetraethylammonium and M is sodium or potassium.

4. A zeolite according to claim 1 or claim 2 wherein M is hydrogen, ammonium or a metal of groups 2 to 8 of the Periodic Table.

5. A zeolite according to claim 4 wherein M is rare earth.

6. A method for preparing the zeolite of claim 1 which comprises preparing a reaction mixture containing a source of an alkali metal oxide, chromic oxide, ferric oxide, an oxide of silicon, $R_2O$ and water and having a composition, in terms of mole ratios of oxides, falling within the following ranges:

$$SiO_2/R_2O = 2 \text{ to } 50$$
$$M_2O/R_2O = 0.0 \text{ to } 8.0$$
$$(Cr_2O_3+Fe_2O_3)/R_2O = 0.01 \text{ to } 1.0$$
$$H_2O/R_2O = 80 \text{ to } 500$$

wherein $R_2O$ is the oxide form of an organic compound containing an element of Group 5-A of the Periodic Table, said organic compound comprising an alkyl or aryl group having between 1 and 7 carbon atoms, at least one of which comprises an ethyl radical, and M is an alkali or alkaline earth metal, and maintaining said mixture until crystals of said zeolite are formed.

7. A method according to claim 6 wherein said mixture has a composition, in terms of moles of oxides, falling within the following ranges:

$$SiO_2/R_2O = 4 \text{ to } 23$$
$$M_2O/R_2O = 0.1 \text{ to } 2.4$$
$$(Cr_2O_3+Fe_2O_3)/R_2O = 0.01 \text{ to } 0.3$$
$$H_2O/R_2O = 100 \text{ to } 400$$

wherein $R_2O$ and M are as before.

8. A method according to claim 6 or claim 7 wherein $R_2O$ is the oxide form of a quaternary compound of an element of said Group 5-A of the Periodic Table.

9. A method according to any of claims 6 to 8 wherein R is a tetraethyl radical.

10. A method according to claim 9 wherein R is tetraethylphosphonium.

11. A method according to claim 10 wherein tetraethylammonium or tetraethylphosphonium is introduced into the reaction mixture as the bromide.

12. The use of a catalyst comprising the zeolite claimed in any of claims 1 to 5 for catalytic conversion of an organic charge.

**Patentansprüche**

1. Zeolith ZSM-12 der folgenden, in Molen wasserfreier Oxide ausgedrückten, Zusammensetzung:

$$0\text{—}8\ M_{2/n}O\text{: } [(a)\ Cr_2O_3+(b)\ Fe_2O_3+(c)\ Al_2O_3]\text{: } 100\ SiO_2$$

worin M wenigstens ein Kation der Valenz n, a=0 bis 4, b=0 bis 5 und c=0,001 bis 0,5 sind, mit der Maßgabe, daß a und b nicht beide 0 sein können und daß, wenn entweder a oder b 0 ist, b bzw. a größer sein müssen als c.

2. Zeolith nach Anspruch 1 mit der Zusammensetzung:

$$0\text{—}4\ R_2O\text{: } 0\text{—}4\ M_{2/n}O\text{: } [(a)\ Cr_2O_3+(b)\ Fe_2O_3+(c)\ Al_2O_3]\text{: } 100\ SiO_2$$

worin $R_2O$ die Oxidform einer organischen Verbindung ist, die ein Element der Gruppe 5A des Periodensystems der Elemente enthält, wobei diese Verbindung eine oder mehrere Alkyl- oder Aryl-Gruppen umfaßt, die von 1 bis 7 Kohlenstoffatome aufweisen und von denen wenigstens eine Gruppe eine Ethylgruppe ist.

3. Zeolith nach Anspruch 2, bei dem R Tetraethylammonium und M Natrium oder Kalium sind.

4. Zeolith nach Anspruch 1 oder 2, bei dem M Wasserstoff, Ammonium oder ein Metall der Gruppe 2 bis 8 des Periodensystems der Elemente sind.

5. Zeolith nach Anspruch 4, bei dem M eine Seltene Erde ist.

6. Verfahren zur Herstellung des Zeolithen nach Anspruch 1, das umfaßt: Herstellen einer Reaktionsmischung, die eine Quelle für ein Alkalimetalloxid, Chrom(III)oxid, Eisen(III)oxid, ein Siliciumoxid, $R_2O$ und Wasser enthält und ausgedrückt in Molverhältnissen von Oxiden eine Zusammensetzung aufweist, die in die folgenden Bereiche fällt:

$$SiO_2/R_2O = 2 \text{ bis } 50$$
$$M_2O/R_2O = 0{,}0 \text{ bis } 8{,}0$$
$$(Cr_2O_3+Fe_2O_3)/R_2O = 0{,}01 \text{ bis } 1{,}0$$
$$H_2O/R_2O = 80 \text{ bis } 500$$

worin $R_2O$ die Oxidform einer organischen Verbindung ist, die ein Element der Gruppe 5A des Periodensystems der Elemente enthält, wobei diese organische Verbindung eine Alkyl- oder Aryl-Gruppe enthält, die zwischen 1 bis 7 Kohlenstoffatome aufweist, wobei wenigstens eine davon einen Ethylrest enthält, und M ein Alkali- oder Erdalkalimetall ist, und Halten dieser Mischung solange, bis sich Kristalle des genannten Zeolithen gebildet haben.

7. Verfahren nach Anspruch 6, bei dem die genannte Mischung, ausgedrückt in Molen von Oxiden, eine Zusammensetzung aufweist, die in die folgenden Bereiche fällt:

$$SiO_2/R_2O = 4 \text{ bis } 23$$
$$M_2O/R_2O = 0{,}1 \text{ bis } 2{,}4$$
$$(Cr_2O_3+Fe_2O_3)/R_2O = 0{,}01 \text{ bis } 0{,}3$$
$$H_2O/R_2O = 100 \text{ bis } 400$$

worin $R_2O$ und M wie vorn definiert sind.

8. Verfahren nach Anspruch 6 oder Anspruch 7, bei dem $R_2O$ die Oxidform einer quaternären Verbindung eines Elements der Gruppe 5A des Periodensystems der Elemente ist.

9. Verfahren nach einem der Ansprüche 6 bis 8, bei dem R ein Tetraethyl-Rest ist.

10. Verfahren nach Anspruch 9, bei dem R Tetraethylphosphonium ist.

11. Verfahren nach Anspruch 10, bei dem Tetraethylammonium oder Tetraethylphosphonium der Reaktionsmischung als Bromid zugesetzt werden.

12. Verwendung eines Katalysators, der den in einem der Ansprüche 1 bis 5 beanspruchten Zeolithen enthält, zur katalytischen Umwandlung eines organischen Einsatzprodukts.

## Revendications

1. Zéolite ZSM-12 présentant la composition en termes de moles d'oxydes anhydres:

$$0\text{—}8\ M_{2/n}O: \{(a)\ Cr_2O_3+(b)\ Fe_2O_3+(c)\ Al_2O_3\}\ 100\ SiO_2$$

dans laquelle:

M est au moins un cation de valence n;
a est égal à 0 à 4;
b est égal à 0 à 5; et,
c est égal à 0,001 à 0,5,

étant entendu que a et b ne peuvent pas être à la fois 0 et que, lorsque l'un ou l'autre de a ou de b est égal à 0, b ou a respectivement doivent être supérieures à c.

2. Zéolite suivant la revendication 1, présentant la composition:

$$0\text{—}4\ R_2O: 0\text{—}4\ M_{2/n}O: \{(a)\ Cr_2O_3+(b)\ Fe_2O_3+(c)\ Al_2O_3\}: 100\ SiO_2$$

dans laquelle:

$R_2O$ est la forme oxydée d'un composé organique contenant un élément du groupe 5-A de la classification périodique, lequel composé comprend un ou plusieurs groupes alkyle ou aryle contenant de 1 à 7 atomes de carbone, au moins l'un d'entre eux étant un radical éthyle.

3. Une zéolite suivant la revendication 2, dans laquelle R est le radical tétraéthylammonium et M est le sodium ou le potassium.

4. Une zéolite suivant la revendication 1 ou 2, dans laquelle M est l'hydrogène, l'ammonium ou un métal des groupes 2 à 8 de la classification périodique.

5. Une zéolite selon la revendication 4, dans laquelle M est une terre rare.

6. Une méthode de préparation de zéolite de la revendication 1, qui consiste à préparer un mélange réactionnel contenant une source d'un oxyde de métal alcalin, l'oxyde de chrome, l'oxyde ferrique, un oxyde de silicium, $R_2O$ et l'eau et ayant la composition en termes de rapports molaires des oxydes comprise dans le domaine suivant:

$$SiO_2/R_2O = 2 \text{ à } 50$$
$$M_2O/R_2O = 0{,}0 \text{ à } 8{,}0$$
$$(Cr_2O_3+Fe_2O_3)/R_2O = 0{,}01 \text{ à } 1{,}0$$
$$H_2O/R_2O = 80 \text{ à } 500$$

dans lesquels:

$R_2O$ est la forme oxydée d'un composé organique contenant un élément du groupe 5-A de la classification périodique, ce composé organique comprenant un groupe alkyle ou aryle ayant de 1 à 7 atomes de carbone, au moins l'un étant un radical éthyle; et,

M est un métal alcalin ou alcalinoterreux,

et en ce que le mélange ainsi obtenu est conservé jusqu'à ce que des cristaux de ladite zéolite se soit formés.

7. Un procédé selon la revendication 6, dans lequel ledit mélange présente une composition en termes de rapports molaires des oxydes tombant dans le domaine suivant:

$$SiO_2/R_2O = 4 \text{ à } 23$$
$$M_2O/R_2O = 0{,}1 \text{ à } 2{,}4$$
$$(Cr_2O_3+Fe_2O_3)/R_2O = 0{,}01 \text{ à } 0{,}3$$
$$H_2O/R_2O = 100 \text{ à } 400$$

dans lesquels:

$R_2O$ et M sont tels que définis ci-dessus.

8. Un procédé selon la revendication 6 ou la revendication 7, dans lequel $R_2O$ est la forme oxydée d'un composé quaternaire d'un élément du groupe 5-A précité de la classification périodique.

9. Un procédé selon une quelconque des revendications 6 à 8, dans lequel R est un radical tétraéthyle.

10. Un procédé selon la revendication 9, dans lequel R est le radical tétraéthylphosphonium.

11. Un procédé selon la revendication 12, dans lequel le radical tétraéthylammonium ou tétraéthylphosphonium est introduit dans le mélange réactionnel sous la forme de son bromure.

12. L'emploi d'un catalyseur comprenant la zéolite selon l'une quelconque des revendications 1 à 5 pour la conversion catalytique d'une charge organique.